# DEMANDE DE BREVET EUROPEEN

(11) **EP 4 414 870 A1**
(43) Date de publication de la demande: **14.08.2024**
(21) Numéro de dépôt: 24155671.1
(22) Date de dépôt: 05.02.2024
(51) Int. Cl.: G06F 21/51, G06F 21/57

(54) **DEMARRAGE SECURISE D'UN DISPOSITIF DE TRAITEMENT**

(30) Priorité: 08.02.2023 FR 2301188
(71) Demandeur: STMicroelectronics International N.V., 1228 Plan-les-Ouates, Geneva (CH)
(72) Inventeur: TROTTIER, Gilles, 72500 FAY (FR)
(74) Mandataire: Cabinet Beaumont

(57) **Abrégé**

La présente description concerne un procédé comprenant l'exécution, par un processeur (104) d'un dispositif de traitement (100), d'un code de démarrage afin de réaliser une séquence de démarrage du dispositif de traitement, l'exécution comprenant :
- au moins une étape de vérification du bon déroulement de la séquence de démarrage ; et
- si l'au moins une étape de vérification identifie une erreur dans le déroulement de la séquence de démarrage, le stockage d'une valeur de statut dans un registre (114) du dispositif de traitement et la réinitialisation du dispositif de traitement, le registre (114) étant accessible en lecture par l'intermédiaire d'une interface de débogage (112) du dispositif.

## Description

### Domaine technique

La présente description concerne de façon générale des dispositifs électroniques, et en particulier des dispositifs de traitement et des procédés de démarrage d'un dispositif de traitement.

### Technique antérieure

De manière générale, lors du démarrage d'un dispositif de traitement, tel qu'un dispositif comprenant un ou plusieurs processeurs, un code de démarrage est exécuté afin de vérifier, par exemple, l'authenticité et/ou l'intégrité de certains codes applicatifs.

Pour des raisons de sécurité et de confidentialité, le code de démarrage s'exécute généralement sans affichage d'information sur le déroulement de l'exécution, et de telles informations ne sont alors pas disponibles pour un utilisateur du dispositif. Ainsi, si une erreur a lieu, il n'est pas possible d'en comprendre la cause, ni même à quel moment l'erreur a eu lieu. De même, lorsque le code de démarrage comprend l'installation d'un code applicatif, l'installation peut échouer sans que l'utilisateur du dispositif en soit averti. Dans le cas où une erreur ait lieu pendant ce démarrage, l'absence d'information rend difficile le débogage du code de démarrage. Toutefois, il existe un problème technique pour permettre le débogage du code de démarrage sans compromettre la sécurité de l'exécution de ce code.

### Résumé de l'invention

Un mode de réalisation prévoit un procédé comprenant l'exécution, par un processeur d'un dispositif de traitement, d'un code de démarrage afin de réaliser une séquence de démarrage du dispositif de traitement, l'exécution comprenant :
- au moins une étape de vérification du bon déroulement de la séquence de démarrage ; et
- si l'au moins une étape de vérification identifie une erreur dans le déroulement de la séquence de démarrage, le stockage d'une valeur de statut dans un registre du dispositif de traitement et la réinitialisation du dispositif de traitement, le registre étant accessible en lecture par l'intermédiaire d'une interface de débogage du dispositif.

Selon un mode de réalisation, la valeur de statut est codée sur une pluralité de bits, chaque bit indiquant l'état d'une étape de vérification associée.

Selon un mode de réalisation, le code de démarrage est configuré pour, suite à chaque étape de vérification, commander la programmation d'un bit associé à une étape de vérification, vers une première valeur lorsqu'une erreur a eu lieu lors de l'étape de vérification.

Selon un mode de réalisation, le registre fait partie d'une mémoire non volatile, le registre étant accessible en lecture par l'intermédiaire de l'interface de débogage durant l'exécution du code de démarrage sans que d'autres emplacements dans la mémoire non volatile soient accessibles par l'intermédiaire de l'interface de débogage.

Selon un mode de réalisation, le procédé ci-dessus comprend en outre :
- la récupération de la valeur de statut, par l'interface de débogage ; et
- le débogage, par un dispositif externe, de la séquence de démarrage, sur la base de la valeur de statut.

Selon un mode de réalisation, la récupération de la valeur de statut a lieu lors de l'exécution de la séquence de démarrage.

Selon un mode de réalisation, le processeur est dans un état fermé lors de la séquence de démarrage.

Selon un mode de réalisation, au moins une étape de vérification, parmi la pluralité d'étapes de vérification du code de démarrage, comprend la vérification de l'authenticité et/ou de l'intégrité et/ou du format, d'un ou plusieurs codes applicatifs chargés dans un premier emplacement mémoire.

Selon un mode de réalisation, au moins une étape de vérification, parmi la pluralité d'étapes de vérification du code de démarrage, comprend la vérification de l'authenticité et/ou de l'intégrité et/ou du format, d'un ou plusieurs codes d'installation ou de mises à jour chargés dans un deuxième emplacement mémoire.

Selon un mode de réalisation, la valeur de statut est une valeur hexadécimale.

Un mode de réalisation prévoit un dispositif de traitement comprenant :
- un processeur configuré pour, lors de l'exécution d'un code de démarrage afin de réaliser une séquence de démarrage du dispositif de traitement, réaliser :
- au moins une étape de vérification du bon déroulement de la séquence de démarrage ; et - si l'au moins une étape de vérification identifie une erreur dans le déroulement de la séquence de démarrage, le stockage d'une valeur de statut dans un registre non volatile du dispositif de traitement et la réinitialisation du dispositif de traitement,
   le registre étant accessible en lecture par l'intermédiaire d'une interface de débogage du dispositif.

Selon un mode de réalisation, le registre fait partie d'une mémoire non volatile, le registre étant accessible en lecture par l'intermédiaire de l'interface de débogage durant l'exécution du code de démarrage sans que d'autres emplacements dans la mémoire non volatile soient accessibles par l'intermédiaire de l'interface de débogage.

Selon un mode de réalisation, le registre est accessible lors de la séquence de démarrage par l'intermédiaire de l'interface de débogage.

Selon un mode de réalisation, le processeur est dans un état fermé lors de la séquence de démarrage.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par blocs d'un dispositif de traitement selon un mode de réalisation de la présente description ;
la figure 2 est un organigramme illustrant des étapes d'un procédé d'exécution d'un code de démarrage selon un mode de réalisation de la présente description ; et
la figure 3 illustre un exemple de réalisation d'une interface du dispositif de traitement.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différentes étapes exécutés lors d'un démarrage d'un dispositif de traitement ne sont pas décrites en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

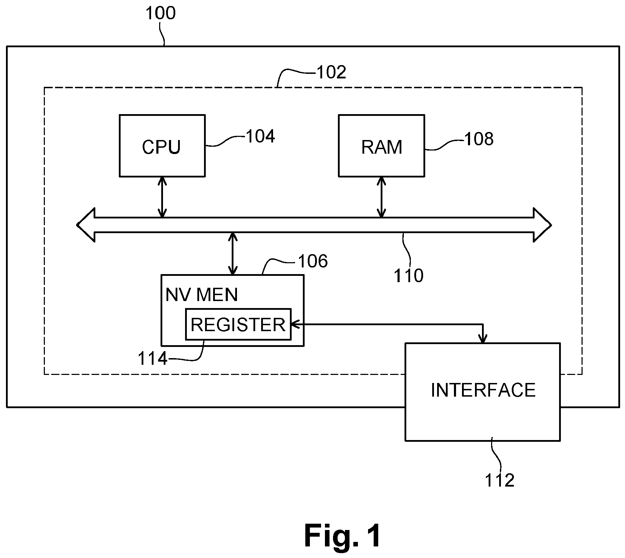

La figure 1 est un schéma par blocs d'un dispositif de traitement 100 comprenant un circuit intégré 102 selon un mode de réalisation de la présente description.

Le dispositif de traitement 100 est par exemple un dispositif mobile, tel qu'un téléphone mobile, ou une carte électronique telle qu'une carte à microcircuits.

Le circuit 102 comprend par exemple un processeur 104 (CPU) relié à une mémoire non volatile 106 (NV MEM) et à une mémoire volatile 108 (RAM) par l'intermédiaire d'un bus 110. A titre d'exemple, la mémoire 106 est une mémoire de type Flash, et la mémoire 108 est une mémoire volatile, par exemple de type RAM (de l'anglais "Random Access Memory").

Le dispositif de traitement comprend, par exemple, en outre une interface de débogage 112 (INTERFACE). L'interface 112 est par exemple une interface de type JTAG (de l'anglais « Join Test Action Group ») ou une interface de type SWD (de l'anglais « Serial Wire Debug »). L'interface 112 est, par exemple, une interface configurée pour permettre accès au dispositif 100 lors de l'exécution d'opérations de débogage du circuit 102.

Lors du démarrage du dispositif de traitement 100, un code de démarrage, par exemple stocké dans la mémoire non volatile 106, est exécuté. Le code de démarrage permet par exemple de vérifier le bon fonctionnement du circuit 102 et en particulier l'intégrité et/ou l'authenticité de certains codes applicatifs s'exécutant suite au démarrage du dispositif de traitement 100. Le code de démarrage permet, par exemple, en outre la mise à jour de codes applicatifs, par exemple stockés dans la mémoire non volatile 106. Le code de démarrage permet, par exemple, en outre et lors de certains démarrages du dispositif 100, l'installation d'autres codes applicatifs. A titre d'exemple, lors d'une mise à jour et/ou d'une installation d'un code applicatif, le code de démarrage est configuré en outre pour vérifier l'authenticité et l'intégrité de la mise à jour et/ou du code applicatif installé.

Le processeur 104 est par exemple verrouillé, ou placé dans un état fermé, lors de l'exécution du code de démarrage, pour des raisons de sécurité. En effet, l'exécution du code de démarrage fait, par exemple, intervenir des données sensibles et/ou confidentielles, telles que, par exemple, des clefs de chiffrement. En particulier, dans l'état fermé, le processeur 104 n'est pas accessible par l'interface 112. Ainsi, cela apporte une protection contre des attaques visant à obtenir des informations sur ces données sensibles et/ou confidentielles.

A titre d'exemple, la mémoire non volatile 106 comprend un registre 114 (REGISTER) relié à l'interface 112. A titre d'exemple, le registre 114 est accessible par l'interface 112 lorsque le code de démarrage s'exécute, sans que d'autres emplacements dans la mémoire non volatile 106 soient accessibles par l'interface 112. Selon un mode de réalisation, le registre 114 est par exemple configuré pour recevoir, par exemple par l'intermédiaire du bus 110, des indications sur le déroulement du code de démarrage. A titre d'exemple, le code de démarrage s'effectue en une pluralité d'étapes. Le code de démarrage est par exemple configuré pour, suite à au moins une étape, commander le stockage, dans le registre 114, d'une valeur d'indication de statut de l'exécution du code de démarrage dans le registre 114 indiquant si l'étape a réussi ou non.

Selon un mode de réalisation, l'indication prend la forme d'un champ de bits. Chaque bit est par exemple associé avec l'état d'une étape parmi des étapes de l'exécution du code de démarrage.

A titre d'exemple, une programmation à la valeur 1 d'un bit de la valeur d'indication de statut, indique qu'une erreur a eu lieu lors de l'étape associée, et une programmation à la valeur 0 indique que l'étape associée s'est déroulée sans erreur. Dans un autre exemple, la programmation à la valeur 0 indique qu'une erreur a eu lieu lors de l'étape et une programmation à la valeur 1 indique que l'étape s'est déroulée sans erreur.

A titre d'exemple, la valeur d'indication de statut fournie par le registre 114 vers l'interface 112 prend la forme d'une valeur hexadécimale. La valeur hexadécimale encode par exemple l'information de quelles sont les étapes ayant présenté des erreurs et celles n'ayant pas présenté d'erreur. Dans un autre exemple, la valeur d'indication est un nombre binaire dont le nombre de bits correspond par exemple au nombre d'étapes dans lesquelles le code de démarrage est configuré pour indiquer la présence d'erreurs d'exécution ou non.

Le code de démarrage est par exemple un code immutable et s'exécute par exemple tel une « boite noire ». Autrement dit, à part ce qui est enregistré dans le registre 114, l'exécution du code de démarrage ne laisse aucun historique des étapes de son exécution. A titre d'exemple, lorsqu'une erreur lors de l'exécution du code de démarrage a lieu, une initialisation du dispositif 100 s'exécute, ce qui peut provoquer l'entrée dans une boucle infinie par le dispositif de traitement. L'erreur provient, par exemple, d'une mauvaise configuration du code de démarrage et/ou d'un mauvais chiffrage du code applicatif à installer ou à mettre à jour et/ou d'un défaut d'authenticité et/ou d'intégrité du code applicatif et/ou d'un mauvais format dans le codage du code applicatif, etc.

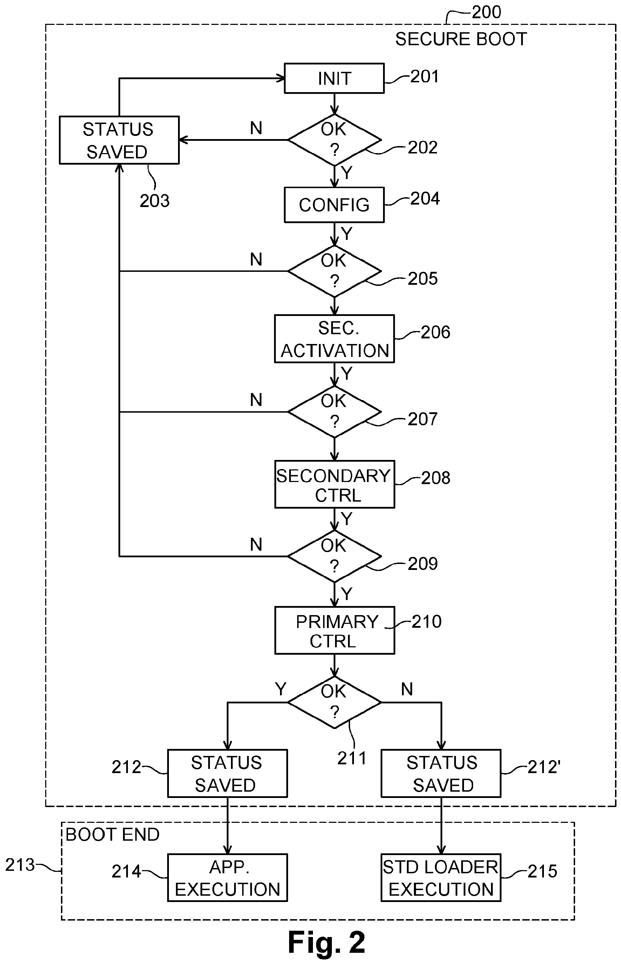

La figure 2 est un organigramme illustrant des étapes d'un procédé d'exécution d'un code de démarrage. Ce procédé est mis en oeuvre, par exemple, par le processeur 104, sous la commande d'instructions stockées dans une mémoire du dispositif 100, telle que la mémoire 106 ou 108.

Dans une première phase 200 (SECURE BOOT), le dispositif de traitement 100 est par exemple démarré ou réinitialisé. Le code de démarrage est alors exécuté. La première phase 200 comprend par exemple des étapes 201 à 212 et 212'.

Dans l'étape 201 (INIT), le dispositif de traitement 100 est par exemple initialisé. A titre d'exemple, le processeur 104 est placé dans l'état fermé et le code de démarrage, ainsi que par exemple des données sensibles telles que des clefs de chiffrement, ne sont par exemple pas accessibles par l'intermédiaire de l'interface 112.

Il est ensuite vérifié, dans l'étape 202 (OK ?), si l'initialisation, réalisée dans l'étape 201, s'est bien déroulée ou non. A titre d'exemple, si une erreur est détectée lors de la réalisation de l'étape 202 (branche N), le procédé continue dans une étape 203 (STATUS SAVED). A titre d'exemple, une erreur a lieu dans l'étape 201 lorsque qu'une clef de chiffrement est corrompue. Dans un autre exemple, une erreur lors de l'étape 201 a lieu lorsque le dispositif de traitement 100 est mal configuré et que le code de démarrage ne s'exécute pas.

Lors de l'étape 203, la valeur d'indication de statut, par exemple stockée dans le registre 114, est actualisée. A titre d'exemple, les bits de la valeur d'indication de statut sont par défaut tous programmés à la valeur 0. Suite à une erreur dans l'étape 201, le bit de la valeur d'indication de statut associé à l'étape d'initialisation 201 est par exemple programmé à la valeur 1, indiquant qu'une erreur a eu lieu lors de la réalisation de cette étape. Dans un autre exemple, le bit est par exemple laissé à la valeur 0, si c'est cette valeur qui indique une erreur.

Suite à l'étape 203, le procédé reprend à l'étape 201 d'initialisation.

Dans le cas où l'étape 201 s'est déroulée avec succès (branche Y en sortie de l'étape 202), autrement dit qu'aucune erreur n'a eu lieu, le procédé continue dans l'étape 204 (CONFIG).

L'étape 204 est par exemple une étape dans laquelle la configuration du code de démarrage est vérifiée. Suite à l'étape 204, il est vérifié dans une nouvelle étape 205 (OK ?) si l'étape de vérification 204 s'est déroulée sans erreur, en d'autres termes si la configuration du code de démarrage ne s'est pas terminée avec succès.

Dans le cas où au moins une erreur a eu lieu lors de l'étape 204 de vérification de la configuration (branche N en sortie de l'étape 205), le procédé continue dans une réalisation de l'étape 203. Le bit de la valeur d'indication associé à l'étape de vérification de configuration est alors programmé à la valeur indiquant une erreur.

Dans le cas où aucune erreur n'a eu lieu lors du déroulement de l'étape de vérification de configuration 204 (branche Y en sortie de l'étape 205), le procédé continue dans une étape 206 (SEC. ACTIVATION). L'étape 206 consiste par exemple en l'activation de mesures de sécurité sur le circuit 102, et plus particulièrement sur le processeur 104. A titre d'exemple, lors de l'étape 206, une unité de protection de la mémoire (en anglais « Memory Protection Unit ») est activée afin de limiter l'exécution du code de démarrage à une mémoire particulière, par exemple à une mémoire de type User Flash comprise dans la mémoire 106. A titre d'exemple, lors de l'étape 206, une unité d'accès sécurisé (en l'anglais « Secure Access Unit ») est activée afin de définir et de protéger des zones sécurisées de la mémoire 106. A titre d'exemple, lors de l'étape 206, des mécanismes de détection d'altérations physiques (en anglais "tamper détection mechanisms") sont activés afin de détecter des attaques physiques sur le dispositif 100. A titre d'exemple, l'étape 206 comprend en outre la vérification de bits optionnels (de l'anglais « Option Bytes »), par exemple compris dans la mémoire 108. A titre d'exemple, les bits optionnels définissent une zone sécurisée et/ou une zone non sécurisée de la mémoire 106. Suite à l'étape 206, il est déterminé, dans une étape 207 (OK ?), si l'étape 206 a correctement été exécutée. En d'autres termes, l'étape 207 consiste en la vérification de si au moins une erreur a eu lieu lors de l'exécution de l'étape 206.

Dans le cas où au moins une erreur dans l'exécution de l'étape 206 est détectée dans l'étape 207 (branche N), le procédé continue dans une réalisation de l'étape 203. Le bit de la valeur d'indication de statut associé à l'étape de configuration de l'étape 206 est programmé à la valeur indiquant une erreur.

Si, lors de l'étape 207, il est déterminé que l'étape 206 s'est déroulée sans erreur, le procédé continue dans une étape 208 (SECONDARY CTRL). Lors de l'étape 208, un ou plusieurs emplacements mémoire secondaires, par exemple compris dans la mémoire non volatile 106, sont consultés. A titre d'exemple, l'un ou plusieurs emplacements mémoire secondaires sont configurés pour stocker un ou plusieurs codes de mise à jour d'un ou plusieurs codes applicatifs du dispositif de traitement 100. De manière alternative ou additionnelle, l'un ou plusieurs emplacements mémoire secondaires sont configurés pour stocker un ou plusieurs programmes d'installation d'un ou plusieurs nouveaux codes applicatifs. Dans un autre exemple, l'un ou plusieurs emplacements secondaires sont vides, par exemple dans le cas où aucun code applicatif n'est à mettre à jour ou à installer. A titre d'exemple, l'étape 208 comprend des vérifications d'authenticité et/ou d'intégrité et/ ou de format du ou des codes compris dans l'un ou plusieurs emplacements mémoire secondaires.

Suite à l'étape 208, il est déterminé, dans l'étape 209 (OK ?), si au moins une des vérifications parmi celles de l'intégrité, de l'authenticité et du format du ou des codes applicatifs a échoué. En d'autres termes, il est déterminé si au moins une mise à jour ou installation, n'est pas intègre et/ou n'est pas authentique et/ou a un problème de format.

Si au moins une des vérifications a échoué lors de la réalisation de l'étape 208 (branche N en sortie de l'étape 209), le procédé continue en une réalisation de l'étape 203. Le bit de la valeur d'indication de statut associé à l'étape 208 est programmé à la valeur indiquant une erreur lors de l'étape 208.

Dans le cas où les vérifications de l'étape 208 ont toutes réussi, (branche Y en sortie de l'étape 209), le procédé continue par exemple dans l'étape 210 (PRIMARY CTRL). Dans le cas où les étapes 208 et 209 ne sont pas réalisées, l'étape 210 fait suite à la détection d'aucune erreur lors de l'exécution de l'étape 206.

Lors de la réalisation de l'étape 210, un ou plusieurs emplacements mémoire primaires est par exemple consulté par le processeur 104. A titre d'exemple, l'un ou plusieurs emplacements mémoire primaires comprennent un ou plusieurs codes applicatifs configurés pour être exécutés suite au démarrage du dispositif de traitement 100. A titre d'exemple, l'étape 210 comprend des vérifications d'authenticité et/ou d'intégrité et/ ou de format du ou des codes compris dans l'un ou plusieurs emplacements mémoire primaires.

Suite à l'étape 210, il est déterminé, dans l'étape 211 (OK ?) l'état des vérifications effectuées lors de la réalisation de l'étape 210.

Dans le cas où les vérifications de l'étape 210 ont toutes réussi, (branche Y en sortie de l'étape 211), le procédé continue dans l'étape 212 (STATUS SAVED). Dans le cas contraire, (branche N en sortie de l'étape 211), le procédé continue dans l'étape 212' (STATUS SAVED).

L'étape 212' consiste par exemple en la programmation du bit de la valeur d'indication de statut associé à l'étape 210 vers la valeur indiquant une erreur.

L'étape 212 consiste par exemple en la programmation des bits associés aux étapes 201, 204, 206, 208 et 210 vers la valeur indiquant qu'aucune erreur n'a eu lieu lors de la réalisation de ces étapes. Dans un autre exemple, lorsque qu'une des étapes 201, 204, 206 et 208 se déroule avec succès, le bit de la valeur d'indication de statut est directement programmé vers la valeur indiquant qu'aucune erreur n'a eu lieu. Ainsi, l'étape 212 est similaire à l'étape 212' à la différence que le bit est programmé vers la valeur indiquant qu'aucune erreur n'a eu lieu. Dans l'exemple où la valeur par défaut de la valeur d'indication de statut correspond à la valeur indiquant qu'aucune erreur n'a eu lieu lors de l'exécution du code de démarrage, ou du moins, lors des étapes vérifiées, l'étape 212 est par exemple omise.

A titre d'exemple, la valeur d'indication de statut programmée lors de l'étape 203, l'étape 212 ou l'étape 212' est égale, selon avancement de la séquence de démarrage, aux valeurs suivantes programmées avec les instructions correspondantes :
INIT_DONE (étape 201 réussie) (0x00000001UL)
CONFIG_DONE (étape 204 réussie) (0x00000002UL)
SECURITY_DONE (étape 206 réussie) (0x00000004UL)
SLOT_PRIMARY_1_VALID (premier emplacement mémoire primaire valide) (0x00000010UL)
SLOT_PRIMARY_2_VALID (deuxième emplacement mémoire primaire valide) (0x00000020UL)
SLOT_SECONDARY_1_VALID (premier emplacement mémoire secondaire valide) (0x00000040UL)
SLOT_SECONDARY_2_VALID (deuxième emplacement mémoire secondaire valide) (0x00000080UL)
PARSING_DONE (l'analyse syntaxique du code réussie, réalisée lors de l'étape 208)
   (0x00000100UL)
INSTALLATION_DONE (installation du code réussie, réalisée lors de l'étape 208)
   (0x00000200UL)
VALIDATION_DONE (validation du code réussie, réalisée lors de l'étape 210)
   (0x00000400UL)
JUMP_BL (instruction de saut vers le chargeur de démarrage - "Boot Loader" en anglais - réussie)
   (0x00001000UL)
JUMP_APPLI (instruction de saut vers l'exécution d'application réussie) (0x00002000UL) où les valeurs sont en hexadécimal et les lettres "UL" indiquent le format non-signé long (de l'anglais « unsigned long »).

Selon le codage défini ci-dessus, chaque étape est associée à un bit correspondant de la valeur d'indication de statut, et dans certains modes de réalisation, il est possible que plusieurs bits soient programmés à la fois pour indiquer que plusieurs étapes ont réussi.

Suite à la réalisation de l'étape 212 ou 212', le procédé continue dans une phase 213 (BOOT END). A titre d'exemple, la phase 213 comprend une étape 214 (APP. EXECUTION) faisant par exemple suite à l'étape 212. L'étape 214 consiste par exemple en l'exécution du ou des codes applicatifs par exemple compris dans l'autre emplacement mémoire. Durant la phase 213, l'utilisateur a par exemple la possibilité d'obtenir des informations sur les codes applicatifs s'exécutant, ce qui n'était pas le cas durant la phase 200 lors de l'exécution du code de démarrage.

La phase 213 comprend en outre une étape 215 (STD LOADER EXECUTION) faisant par exemple suite à l'étape 212'. A titre d'exemple, l'étape 215 est réalisée lorsque qu'une erreur a eu lieu lors de l'étape 210. A titre d'exemple, l'étape 215 comprend l'exécution d'un code logiciel de type chargeur (en anglais « loader ») permettant d'accéder à l'un ou les emplacements secondaires afin d'y charger un ou plusieurs nouveaux codes applicatifs. A titre d'exemple, le code logiciel est stocké dans la mémoire non volatile 106. A titre d'exemple, le code logiciel est stockée dans une zone définie comme non sécurisée de la mémoire non volatile 106, cette zone étant par exemple une zone réservée au code système.

A titre d'exemple, la valeur d'indication de statut est accessible, par l'intermédiaire de l'interface 112 à n'importe quel moment dans l'exécution du code de démarrage. Ainsi, il est possible pour un utilisateur du dispositif de traitement 100, par exemple en branchant un dispositif de test (non illustré) sur l'interface 112, de récupérer la valeur d'indication de statut et d'en déduire à quelle étape du démarrage une erreur a eu lieu. De cette façon, il est par exemple possible de savoir si l'erreur est liée à la configuration du code de démarrage. Le dispositif de test est par exemple relié à l'interface 112 par l'intermédiaire de connecteurs, et/ou d'une liaison sans fil.

A titre d'exemple, lorsqu'une erreur a lieu dans l'exécution de la phase 200 du code de démarrage, l'interface 112 est configurée pour mettre en oeuvre un protocole permettant d'extraire et de récupérer la valeur d'indication de statut.

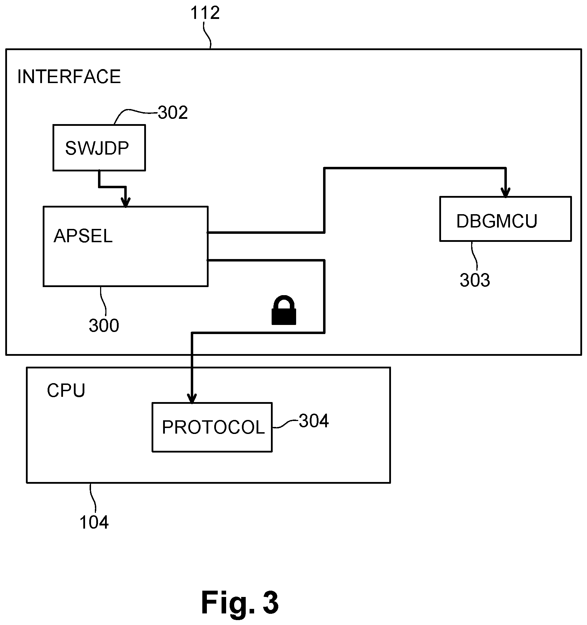

La figure 3 illustre, plus en détail, l'interface 112, et plus particulièrement, les interactions entre l'interface 112 et le processeur 104.

L'interface 112 comprend par exemple un registre 300 (APSEL) configuré pour stocker une valeur, par exemple la valeur d'un bit. L'interface 112 comprend, par exemple, en outre un port de débogage 302 (SWJPD) permettant le branchement d'un dispositif de test externe (non illustré), tel qu'un ordinateur. A titre d'exemple, le port 302 est accessible par l'intermédiaire du dispositif de test externe et permet de programmer la valeur comprise dans le registre 300. L'interface 112 comprend, par exemple, en outre, un registre 303 (DBGMCU) relié au registre 300.

Le processeur 104 met, par exemple, en oeuvre un protocole de débogage 304 (PROTOCOLE) pour des codes applicatifs du dispositif 100. A titre d'exemple, ce protocole 304 peut être exécuté lors de la réalisation de l'étape 214, mais n'est pas accessible pendant la phase de démarrage 200. En particulier, le processeur 104 est, par exemple, configuré pour être placé dans un état ouvert à partir de la phase 213 de la figure 2, lorsque la phase 200 du démarrage est terminée. A titre d'exemple, lorsqu'un bit stocké dans le registre 300 est programmé à la valeur 1 par le dispositif de test externe, le processeur 104 est accessible en débogage par l'intermédiaire du protocole 304. L'exemple d'une programmation d'un bit à la valeur 1 n'est pas limitatif et d'autres programmations d'un ou plusieurs bits d'une donnée comprise dans le registre 300 sont bien sûr envisageables.

A titre d'exemple, le processeur 104 est configuré pour être dans un état fermé lors de l'exécution du code de démarrage, et plus particulièrement lors de la phase 200 du code de démarrage. Lorsque le processeur 104 est dans l'état fermé, l'accès au processeur 104 par l'intermédiaire du protocole 304 et de l'interface 112 est verrouillé.

Durant la phase 200, il est possible pour le dispositif de test externe, branché sur l'interface 112 et en particulier au port 302 de commander l'extraction de la valeur d'indication de statut. A titre d'exemple, la commande d'extraction de statut ne s'effectue pas sur la base de certificat et/ou permission. A titre d'exemple, la valeur programmée dans le registre 300 lors de la phase 200 permet au dispositif de test externe d'accéder au registre 303 et d'y programmer un mot clef. La programmation de ce mot clef dans le registre 303 provoque, par exemple, une réinitialisation du dispositif de traitement 100. Lors de la réinitialisation, le processeur 104 est alors configuré pour exécuter, sur la base du mot clef présent dans le registre 303, un protocole permettant au dispositif de test externe de commander l'extraction de la valeur d'indication de statut et la transmettre vers le dispositif de test.

Bien que la valeur d'indication de statut soit stockée dans une mémoire non volatile, non nécessairement sécurisée, le procédé de débogage du code de démarrage est par exemple soumis à une ou plusieurs restrictions d'accès. A titre d'exemple, un utilisateur du dispositif 100 est en capacité de lire, pendant la phase de démarrage 200, la valeur d'indication de statut mais pas de procéder au débogage du code de démarrage.

Un avantage des modes de réalisation décrits est qu'ils permettent de fournir à l'utilisateur du dispositif 100 une indication de l'état de la procédure de démarrage du dispositif 100. En effet, lorsque le code de démarrage ne s'exécute pas correctement, la valeur d'indication de statut donne à l'utilisateur l'information de l'étape dans laquelle l'erreur est apparue.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la forme et le codage de la valeur d'indication de statut peut varier. De même, uniquement certaines des étapes de vérification 204, 206, 208, 210 de la figure 2 peuvent être mises en oeuvre, et/ou d'autres étapes de vérification inhérentes à l'exécution du code de démarrage, en plus ou à la place des étapes décrites en relation avec la figure 2, peuvent être réalisées. La personne du métier saura choisir les étapes dans l'exécution du code de démarrage pour lesquelles elle souhaite obtenir une indication du déroulement.

Enfin, la mise en oeuvre pratique des modes de réalisation et variantes décrits est à la portée de la personne du métier à partir des indications fonctionnelles données ci-dessus. En particulier, pour ce qui est du stockage de la valeur d'indication de statut, d'autres mémoires que celles décrites en relation avec la figure 1 peuvent être utilisées pour stocker cette valeur.

## Revendications

1. Procédé comprenant l'exécution, par un processeur (104) d'un dispositif de traitement (100), d'un code de démarrage afin de réaliser une séquence de démarrage du dispositif de traitement, l'exécution comprenant :
- au moins une étape de vérification du bon déroulement de la séquence de démarrage ; et
- si l'au moins une étape de vérification identifie une erreur dans le déroulement de la séquence de démarrage, le stockage d'une valeur de statut, indiquant qu'une erreur dans le déroulement de la séquence de démarrage a eu lieu lors de l'au moins une étape de vérification, dans un registre (114) du dispositif de traitement et la réinitialisation du dispositif de traitement, le registre (114) étant accessible en lecture par l'intermédiaire d'une interface de débogage (112) du dispositif.

2. Procédé selon la revendication 1, dans lequel la valeur de statut est codée sur une pluralité de bits, chaque bit indiquant l'état d'une étape de vérification associée.

3. Procédé selon la revendication 2, dans lequel le code de démarrage est configuré pour, suite à chaque étape de vérification, commander la programmation d'un bit associé à une étape de vérification, vers une première valeur lorsqu'une erreur a eu lieu lors de l'étape de vérification.

4. Procédé selon l'une quelconque des revendications 1 à 3, dans lequel le registre (114) fait partie d'une mémoire non volatile (106), le registre (114) étant accessible en lecture par l'intermédiaire de l'interface de débogage (112) durant l'exécution du code de démarrage sans que d'autres emplacements dans la mémoire non volatile (106) soient accessibles par l'intermédiaire de l'interface de débogage.

5. Procédé selon la revendication 4, comprenant en outre :
- la récupération de la valeur de statut, par l'interface de débogage (112) ; et
- le débogage, par un dispositif externe, de la séquence de démarrage, sur la base de la valeur de statut.

6. Procédé selon la revendication 5, dans lequel la récupération de la valeur de statut a lieu lors de l'exécution de la séquence de démarrage.

7. Procédé selon l'une quelconque des revendications 1 à 6, dans lequel le processeur (104) est dans un état fermé lors de la séquence de démarrage.

8. Procédé selon l'une quelconque des revendications 1 à 7, dans lequel au moins une étape de vérification, parmi la pluralité d'étapes de vérification du code de démarrage, comprend la vérification de l'authenticité et/ou de l'intégrité et/ou du format, d'un ou plusieurs codes applicatifs chargés dans un premier emplacement mémoire.

9. Procédé selon l'une quelconque des revendications 1 à 8, dans lequel au moins une étape de vérification, parmi la pluralité d'étapes de vérification du code de démarrage, comprend la vérification de l'authenticité et/ou de l'intégrité et/ou du format, d'un ou plusieurs codes d'installation ou de mises à jour chargés dans un deuxième emplacement mémoire.

10. Dispositif de traitement (100) comprenant :
- un processeur (104) configuré pour, lors de l'exécution d'un code de démarrage afin de réaliser une séquence de démarrage du dispositif de traitement, réaliser :
- au moins une étape de vérification du bon déroulement de la séquence de démarrage ; et
- si l'au moins une étape de vérification identifie une erreur dans le déroulement de la séquence de démarrage, le stockage d'une valeur de statut, indiquant qu'une erreur a eu lieu lors de l'au moins une étape de vérification, dans un registre non volatile (106) du dispositif de traitement et la réinitialisation du dispositif de traitement, le registre étant accessible en lecture par l'intermédiaire d'une interface de débogage (112) du dispositif.

11. Dispositif de traitement (100) selon la revendication 10, dans lequel le registre (114) fait partie d'une mémoire non volatile (106), le registre (114) étant accessible en lecture par l'intermédiaire de l'interface de débogage (112) durant l'exécution du code de démarrage sans que d'autres emplacements dans la mémoire non volatile (106) soient accessibles par l'intermédiaire de l'interface de débogage.

12. Dispositif de traitement (100) selon la revendication 11, dans lequel le registre (114) est accessible lors de la séquence de démarrage par l'intermédiaire de l'interface de débogage (112).

13. Dispositif de traitement (100) selon l'une quelconque des revendications 10 à 12, dans lequel le processeur (104) est dans un état fermé lors de la séquence de démarrage.
